# EUROPEAN PATENT SPECIFICATION

(11) **EP 0 331 346 B1**
(45) Date of publication and mention of the grant of the patent: **27.10.1993**
(21) Application number: 89301747.5
(22) Date of filing: 23.02.1989
(51) Int. Cl.: A01G 1/04

(54) **Mushroom culture**
Pilzkultur
Culture de champignons

(30) Priority: 03.03.1988 GB 8805047; 15.03.1988 GB 8806081
(43) Date of publication of application: 06.09.1989
(73) Proprietor: J D BRAMMER & SON LIMITED, Stoke-on-Trent Staffordshire (GB)
(72) Inventor: Brammer, David George, Stoke-on-Trent Staffordshire (GB); Brammer, Gilbert John, Stoke-on-Trent Staffordshire (GB)
(74) Representative: Lawrence, John Gordon

(56) References cited:
- DE-B- 2 452 039
- FR-A- 2 332 700
- GB-A- 1 257 870
- GB-A- 2 106 764
- US-A- 3 118 249
- US-A- 4 001 966

## Description

This invention concerns mushroom culture.

In conventional mushroom culture wooden trays are packed with compost and stacked in superimposed relationship during the growing period. These trays are generally cumbersome and difficult to handle. Furthermore, in order to reduce the risk of spreading disease from one crop to another, the trays are sterilised at high temperature each time they are emptied and before refilling. Such sterilisation is not always fully effective and anyway shortens the life of the trays. Indeed, it is not uncommon for a tray to break when being handled by a fork-lift truck or the like spilling its compost load to the ground.

It is amongst the objects of the present invention to overcome the problems aforesaid.

It is also well known that the yield of mushrooms attainable from a batch of compost is directly proportional to the weight of that compost.

Attempts, hitherto, to increase yield by using depths of compost greater than the conventional 6 inches (15 cm) or so and pressed to greater densities have been unsuccessful due to destruction of the mushroom mycelium due to overheating.

It is another object of the present invention to provide for mushroom culture on greater masses of compost without the difficulty aforementioned.

According to the present invention there is provided a bale of compressed compost which presents a substantially planar upper surface for mushroom culture characterised by being formed by a plurality of units each in the form of a block whose upper surface is wider than its lower surface arranged adjacent one another in side-by-side relationship to provide air vents extending substantially horizontally through the bale from one side thereof to another between surfaces of adjacent units.

The number and disposition of the air vents may be such that no portion of the bale is more than 15 cm or thereabouts from either an external surface of the bale or one of the air vents.

DE-B-2452039 discloses a vertically extending cylindrical bale with an axial air vent therethrough, but the bale is not of compressed compost as required by the present invention.

The invention includes methods of mushroom culture using compost bales as aforesaid placed on a plurality of superimposed shelves all of which are parts of an integral structure which can be handled as a unit.

The compost may be compressed to form bales which may be pushed by a ram from a baling machine onto the shelves, the shelf unit being indexed in a vertical direction so that the shelves are loaded sequentially.

The invention will be further apparent from the following description, with reference to the several figures of the accompanying drawings which show, by way of example only, compost bales and equipment for use in cultivating mushrooms using such bales.

Of the drawings :-
- Figure 1: shows a plan view of one form of bale;
- Figure 2: shows a front elevation of the bale of Figure 1;
- Figure 3: shows a side elevation of the bale of Figure 1;
- Figure 4: shows a perspective view of a pressing used to assemble the bale of Figure 1;
- Figure 5: shows a front elevation of a shelf unit; and
- Figure 6: shows a front elevation of a baling machine loading the shelves of the unit of Figure 6 with bales of compost.

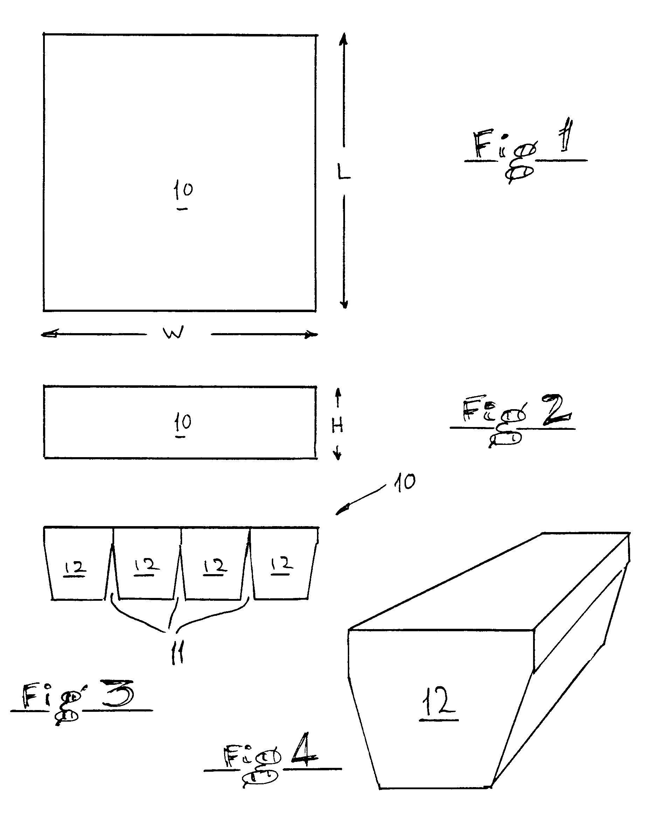

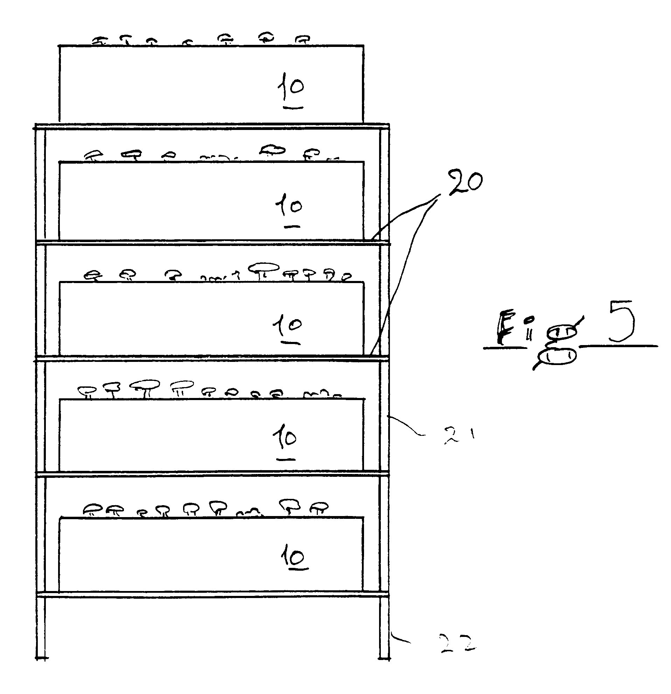

Referring firstly to Figures 1 to 3 it will be seen that the bale 10 comprises a generally rectangular block of compressed compost having a height H of 12 inches (30 cm) a width W of 4 feet (1.22 m) and a length L also of 4 feet (1.22 m).

Wedge-shaped slots forming air vents 11 in the bottom of the bale extend across its full width such that no part of the bale 10 is more than six inches (15 cm) or so from either an external surface of the bale or one of the air vents 11.

The bale 10 may be formed from four individual pressings 12 as shown in Figure 4. These pressings are formed from composted stable manure which has been innoculated with mushroom mycelium (Agaricus bisporus). The compost is compacted to give a density of 48 lbs/ft³ (769 kg/m³) or thereabouts and the four pressings arranged side-by- side on a shelf to form the bale 10.

The bales are stacked in superimposed relationship on shelves 20 (see Figure 5). After about twelve to sixteen days when the mycelium has developed a peat casing is spread over the top surface of the bales and after a further sixteen to twenty-one days the mushrooms start to appear and are harvested over the following six weeks or so.

The shelves 20 are preferably of steel and arranged in spaced superimposed relationship and connected together to form an integral structure by corner members 21 which provide feet 22 upon which the unit can stand.

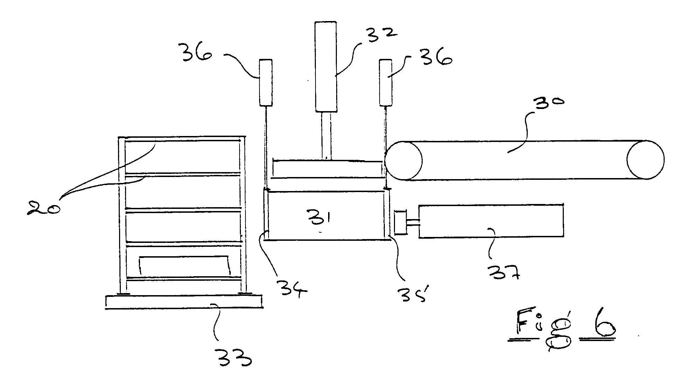

Turning now to Figure 6 it will be seen that the baling machine comprises a conveyor 30 for carrying composted stable manure, which has been innoculated with mushroom mycelium, to fill a mould box 21. After filling the box 31 press 32 can be operated to compact the compost to form a bale. The mould box 31 may comprise a plurality of side-by-side sections to form bales as shown in Figures 1 to 3, for example.

To one side of the mould box 31 is a table 33 upon which one of the shelf units described above can be positioned using a fork-lift truck or other handling device. The table 33 can be lowered in steps - each equal to the spacing between adjacent shelves 20 - to position each shelf 20 in turn level with the base of the box 31.

When a first bale has been formed the opposite side walls 34 and 35 are raised by actuating cylinders 36 to enable a ram 37 to be actuated to push the bale from the box 31 onto the lowermost shelf 20 of the unit. The ram 37 is retracted and walls 34 and 35 lowered in preparation for the formation of a further bale. At the same time the unit is lowered by one step to bring the next higher shelf 20 level with box 31 for receipt of the next bale.

The process is repeated until all of the shelves 20 have been loaded. The unit is then transferred by fork-lift truck or similar into the growing environment.

After the last mushrooms have been harvested, the unit can be removed, emptied and washed down ready for re-use.

It will be appreciated that it is not intended to limit the invention to the above example only, many variations, such as might readily occur to one skilled in the art, being possible, without departing from the scope thereof as defined in the appended claims.

Although the invention has been described with reference to the common mushroom (Agaricus bisporus) it can equally be applied to other species.

## Claims

1. A bale (10) of compressed compost which presents a substantially planar upper surface for mushroom culture characterised by being formed by a plurality of units each in the form of a block whose upper surface is wider than its lower surface arranged adjacent one another in side-by-side relationship to provide air vents (11) extending substantially horizontally through the bale from one side thereof to another between surfaces of adjacent units.

2. A bale according to claim 1, wherein said air vents are of wedge-shaped cross-section.

3. A bale of compost according to claim 1 or claim 2, wherein the number and disposition of the air vents (11) is such that no portion of the bale (10) is more than 15 cm or thereabouts from either an external surface of the bale or one of the air vents.

4. A bale of compost according to any preceding claim which has been compressed to give a density of 48 lbs/ft³ (769 kg/m³) or thereabouts.

## Patentansprüche

1. Ballen (19) aus verdichtetem Kompost, der eine im wesentlichen ebene obere Oberfläche für Pilzkulturen darbietet, dadurch gekennzeichnet, daß er durch mehrere Einheiten gebildet ist, die jede die Form eines Blocks hat, dessen obere Oberfläche größer als seine untere Oberfläche ist, die Seite an Seite aneinander angrenzend angeordnet sind, um Entlüftungskanäle (11) zu bilden, die sich im wesentlichen horizontal durch den Ballen von einer Seite zu einer anderen von diesem zwischen Oberflächen von benachbarten Einheiten erstreckt.

2. Ballen nach Anspruch 1, worin die Entlüftungskanäle von keilförmigem Querschnitt sind.

3. Ballen aus Kompost nach Anspruch 1 oder Anspruch 2, worin die Anzahl und die Anordnung der Entlüftungskanäle 11) derart ist, daß kein Teil des Ballens (10) größer als 15 cm oder so ungefähr ist von entweder einer äußeren Oberfläche des Ballens oder einem der Entlüftungskanäle

4. Ballen aus Kompost nach einem der vorhergehenden Ansprüche, der auf eine Dichte von 48 lbs/ft³ (769 kg/m³) oder so ungefähr komprimiert wurde.

## Revendications

1. Balle (10) de compost comprimé, qui présente une surface supérieure sensiblement plane et destinée à la culture des champignons, caractérisée en ce qu'elle est formée par plusieurs éléments ayant chacun la forme d'un bloc dont la surface supérieure est plus large que la surface inférieure, ces éléments étant adjacents et placés côte à côte afin qu'ils forment des dispositifs (11) de ventilation destinés à la circulation d'air et disposés en direction sensiblement horizontale dans la balle d'un côté à l'autre entre les surfaces des éléments adjacents.

2. Balle selon la revendication 1, dans laquelle les dispositifs de ventilation ont une section en coin.

3. Balle de compost selon la revendication 1 ou 2, dans laquelle le nombre et la disposition des dispositifs de ventilation (11) sont tels qu'aucune partie de la balle (10) n'est à plus de 15 cm environ d'une surface externe de balle ou de l'un des dispositifs de ventilation.

4. Balle de compost selon l'une quelconque des revendications précédentes, qui a été comprimée afin qu'elle possède une masse volumique de 769 kg/m³ (48 livres par pied cubique) environ.
